# EUROPÄISCHE PATENTSCHRIFT

(11) **EP 1 663 744 B1**
(45) Veröffentlichungstag und Bekanntmachung des Hinweises auf die Patenterteilung: **20.08.2008**
(21) Anmeldenummer: 04762389.7
(22) Anmeldetag: 15.07.2004
(51) Int. Cl.: B60S 1/38, B60S 1/40

(54) **WISCHBLATT**
WIPER BLADE
ESSUIE-GLACE

(30) Priorität: 08.09.2003 DE 10341275
(43) Veröffentlichungstag der Anmeldung: 07.06.2006
(73) Patentinhaber: ROBERT BOSCH GMBH, 70442 Stuttgart (DE)
(72) Erfinder: WEILER, Michael, Chungchongbuk-do 363-9 (KR); DIETRICH, Jan, 77815 Buehl (DE)
(86) Internationale Anmeldenummer: PCT/DE2004/001530
(87) Internationale Veröffentlichungsnummer: WO 2005/025956

(56) Entgegenhaltungen:
- WO-A-20/04045927
- DE-A- 19 835 065
- GB-A- 2 005 532
- US-A- 3 838 475

## Beschreibung

### Stand der Technik

Die Erfindung geht insbesondere aus von einem Wischblatt nach dem Oberbegriff des Anspruchs 1.

Aus der DE 198 35 065 A1 ist ein gattungsbildendes Wischblatt für ein Kraftfahrzeug bekannt. Das Wischblatt umfasst eine Wischleiste, die als Hohlprofil mit einem Längskanal ausgebildet ist, in dem ein federelastischer, bogenförmiger Wischleistenträger angeordnet ist, wobei sich entlang einer konkaven Seite des Wischleistenträgers eine Wischlippe der Wischleiste erstreckt.

Ferner umfasst das Wischblatt eine Adaptereinheit zur Anlenkung an einen Wischarm. Die Adaptereinheit weist auf der der Wischlippe abgewandten, infolge des Wischleistenträgers konvex ausgebildeten Seite der Wischleiste, ein im Wesentlichen von einem U-Profil gebildetes Adapterelement aus Blech auf. Das Adapterelement ist mit einstückig angeformten, krallenartigen Klemmmitteln auf der Wischleiste und dem Wischleistenträger befestigt, die eine Kopfleiste der Wischleiste und den darin angeordneten Wischleistenträger untergreifen. Mittels einer Spannkraft der Klemmmittel wird das Adapterelement auf der Wischleiste und der Wischleistenträger in der Wischleiste in Längsrichtung des Wischblatts kraftschlüssig fixiert.

Weiterhin ist aus der GB-A-2 005 532 ein Wischblatt mit den Merkmalen des Oberbegriffs des Anspruchs 1 bekannt.

### Vorteile der Erfindung

Die Erfindung geht aus von einem Wischblatt, insbesondere für ein Kraftfahrzeug, mit einer Wischleiste, die als Hohlprofil mit einem Längskanal ausgebildet ist, in dem ein federelastischer Wischleistenträger angeordnet ist, an dessen konkaven Seite sich eine Wischlippe der Wischleiste entlang erstreckt, sowie mit einer Adaptereinheit zur Anlenkung an einen Wischarm.

Es wird vorgeschlagen, dass die Adaptereinheit und der Wischleistenträger im montierten Zustand über wenigstens eine zumindest in eine erste Längsrichtung wirkende Formschlussverbindung verbunden sind. Ungewünschte Verformungen und/oder Belastungen der Wischleiste und damit Wischqualitätseinbußen können vermieden werden.

Ist an den Wischleistenträger wenigstens ein erstes Formschlusselement angeformt, das in eine Ausnehmung der Adaptereinheit eingreift, kann die Formschlussverbindung konstruktiv einfach erreicht werden und insbesondere ist vorteilhaft einfach eine Rastverbindung erreichbar, wodurch der Montage- und Demontageaufwand reduzierbar ist. Ferner kann die Adaptereinheit vorteilhaft von einem einfachen, einteiligen Kunststoff-Spritzteil gebildet werden. Alternativ oder zusätzlich könnte jedoch auch ein Formschlusselement an der Adaptereinheit angeformt sein, das in eine Ausnehmung des Wischleistenträgers eingreift.

Ferner wird vorgeschlagen, dass das Formschlusselement von einem freigeschnittenen und aufgebogenen Teilstück des Wischleistenträgers gebildet ist. Das Formschlusselement kann kostengünstig in einem Stanz-Biegeprozess angeformt werden. Ferner ist eine sichere Verbindung durch große Anlageflächen erreichbar und ein entsprechendes Formschlusselement kann konstruktiv einfach als Rastelement mit einer Rastschräge ausgebildet werden.

Wirkt die Formschlussverbindung neben der ersten Längsrichtung in eine zweite Längsrichtung, können zusätzliche Verbindungen und Befestigungsmittel zumindest in ihrer Funktion unterstützt oder sogar vollständig eingespart werden. Ferner kann allein durch die Formschlussverbindung eine eindeutige Positionierung bei der Montage erzielt und dieselbe vereinfacht werden.

Die Wirkung der Formschlussverbindung in eine erste und in eine zweite Längsrichtung kann durch das erste Formschlusselement erzielt werden, indem beispielsweise dieses zwei Anschlagflächen bildet. Die Anschlagflächen liegen dabei vorteilhaft in zwei unterschiedlichen, im Wesentlichen parallel zu einer zu wischenden Fläche verlaufende Ebenen und korrespondieren mit jeweils in der entsprechenden Ebene angeordneten Anschlagflächen der Adaptereinheit. Ist die Formschlussverbindung jedoch durch zumindest zwei entgegengesetzt wirkende Formschlusselemente gebildet, können die einzelnen Formschlusselemente besonders konstruktiv einfach ausgebildet werden.

In einer weiteren Ausgestaltung der Erfindung wird vorgeschlagen, dass die Wischleiste im Bereich der Formschlussverbindung zwischen der Adaptereinheit und dem Wischleistenträger eine Aussparung aufweist. Es kann eine vorteilhafte Überdeckung zwischen zwei korrespondierenden Formschlusselementen der Adaptereinheit und des Wischleistenträgers erreicht werden, ohne dass die Wischleiste verformt wird. Zudem kann ein vorteilhaftes Einrastverhalten bei der Montage erzielt werden.

Ferner wird vorgeschlagen, dass die Wischleiste eine Ausnehmung aufweist, durch die das Formschlusselement bei der Montage der Wischleiste auf den Wischleistenträger führbar ist, wodurch die Montage vereinfacht und bei der Montage eine Belastung der Wischleiste reduziert werden kann.

Weist die Adaptereinheit eine Einführungsschräge zur Auslenkung des Formschlusselements bei der Montage auf, kann wiederum die Montage vereinfacht werden.

In einer weiteren Ausgestaltung der Erfindung wird vorgeschlagen, dass die Adaptereinheit wenigstens ein Klemmelement zur Befestigung an einem Wischarm aufweist. Insbesondere bei einer gelenkfreien Verbindung des Wischblatts mit einem Wischarm können zusätzliche, separate Befestigungsmittel, Montageaufwand und Kosten eingespart werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt in einer Seitenansicht,
- Fig. 2: das Wischblatt aus Fig. 1 in demontiertem Zustand,
- Fig. 3: eine Adaptereinheit des Wischblatts aus Fig. 1 in vergrößerter Darstellung,
- Fig. 4: einen Schnitt entlang der Linie IV-IV in Fig. 2 in vergrößerter Darstellung,
- Fig. 5: eine Teilschnittdarstellung durch das Wischblatt aus Fig. 1 im Bereich der Adaptereinheit,
- Fig. 6: einen Längsschnitt durch das Wischblatt im Bereich der Adaptereinheit,
- Fig. 7: einen Längsschnitt durch ein Wischblatt, das eine alternative Adaptereinheit mit einem von einer Umlenkung gebildeten Anschlag umfasst,
- Fig. 8: eine Teilschnittdarstellung durch ein Wischblatt mit insbesondere einer alternativen Wischleiste, die im Bereich einer Formschlussverbindung eine Ausnehmung aufweist,
- Fig. 9: einen Ausschnitt eines Wischblatts bei der Montage mit einer eine Ausnehmung aufweisenden, alternativen Wischleiste,
- Fig. 10: einen Längsschnitt durch ein Wischblatt mit insbesondere einem alternativen Wischleistenträger,
- Fig. 11: einen Ausschnitt eines Wischarms mit einer an eine Wischstange angeformten Adaptereinheit,
- Fig. 12: eine Teilschnittdarstellung durch ein Wischblatt mit einer Adaptereinheit aus Fig. 11 im montierten Zustand,
- Fig. 13: einen Ausschnitt eines Wischblatts mit einer Klemmelemente aufweisenden Adaptereinheit bei der Montage an einem Wischarm und
- Fig. 14: der Ausschnitt aus Fig. 13 nach der Montage.

### Beschreibung der Ausführungsbeispiele

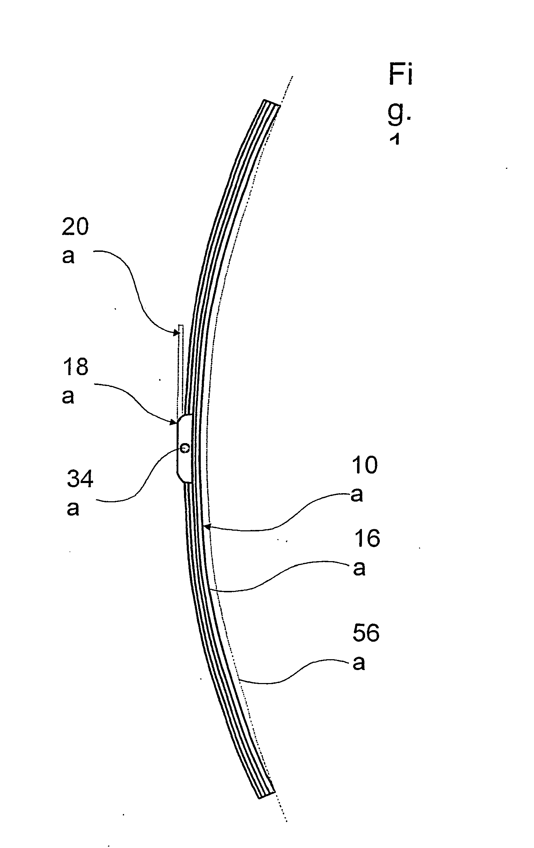

Fig. 1 zeigt ein Wischblatt für ein Kraftfahrzeug in einer Seitenansicht. Das Wischblatt umfasst eine Wischleiste 10a, die als Hohlprofil mit einem Längskanal 12a ausgebildet ist, in dem ein federelastischer, bogenförmiger Wischleistenträger 14a aus Federstahl eingeschoben ist, entlang dessen konkaven Seite sich eine Wischlippe 16a der Wischleiste 10a erstreckt. Ferner umfasst das Wischblatt eine Adaptereinheit 18a aus Kunststoff zur Anlenkung an einen Wischarm 20a (Fig. 1 bis 6). Anstatt aus Kunststoff könnte die Adaptereinheit zumindest teilweise auch aus Metall gebildet sein, beispielsweise aus einem Stahlblech.

Erfindungsgemäß ist die Adaptereinheit 18a und der Wischleistenträger 14a im montierten Zustand über eine in zwei Längsrichtungen 48a, 50a wirkende Formschlussverbindung 22a verbunden. An den Wischleistenträger 14a ist hierfür ein von einem freigeschnittenen und aufgebogenen Teilstück gebildetes Formschlusselement 24a angeformt, das in eine Ausnehmung 26a der Adaptereinheit 18a formschlüssig eingreift.

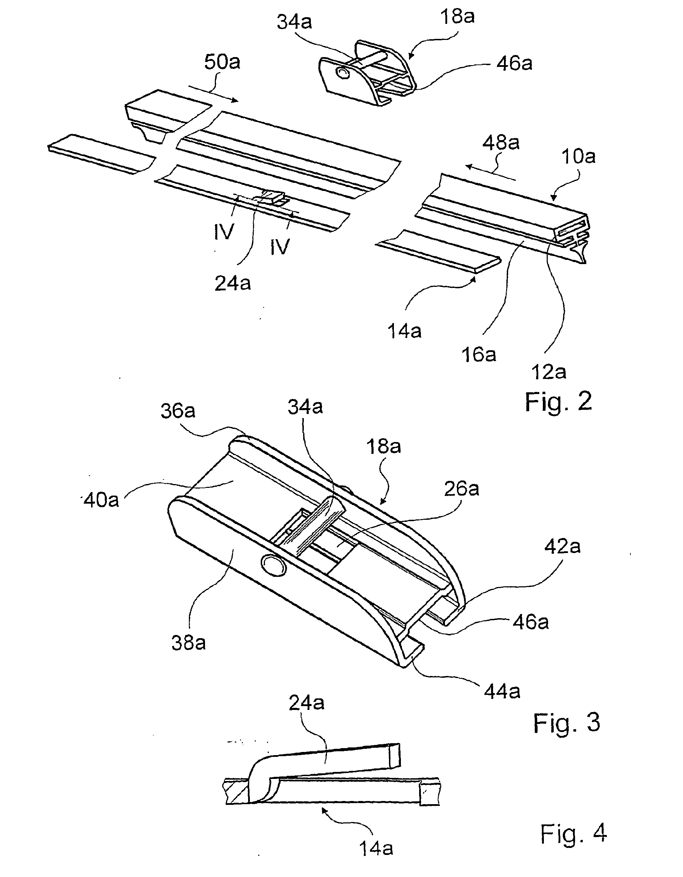

Die Adaptereinheit 18a weist im Wesentlichen einen von einem H-Profil gebildeten Grundkörper mit zwei Seitenwänden 36a, 38a und einer die Seitenwände 36a, 38a verbindenden Zwischenwand 40a auf, in die die Ausnehmung 26a eingebracht ist (Fig. 3). Oberhalb der Zwischenwand 40a, auf einer der Wischleiste 10a abgewandten Seite, ist ein sich quer zur Längsrichtung 48a, 50a der Adaptereinheit 18a erstreckender und die Seitenwände 36a, 38a verbindender Gelenkbolzen 34a zur Kopplung an den Wischarm 20a befestigt. Anstatt einen Gelenkbolzen am Grundkörper zu befestigen, könnte dieser auch einstückig an den Grundkörper angeformt sein, wodurch zusätzliche Bauteile, Montageaufwand und Kosten eingespart werden könnten. Unterhalb der Zwischenwand 40a sind an die Seitenwände 36a, 38a sich zueinander erstreckende, im Wesentlichen senkrecht zu den Seitenwänden 36a, 38a ausgerichtete Fortsätze 42a, 44a angeformt.

Bei der Montage des Wischblatts wird zuerst der Wischleistenträger 14a in Längsrichtung 48a mit einem einem freien Ende des Formschlusselements 24a abgewandten Ende voraus in den Längskanal 12a der Wischleiste 10b eingeschoben, wodurch vorteilhaft ein Verhaken des Formschlusselements 24a im Längskanal 12a der Wischleiste 10a vermieden wird (Fig. 2). Anschließend wird die Adaptereinheit 18a in Längsrichtung 50a mit einer an die Zwischenwand 40a angeformten Einführungsschräge 46a voraus, ausgehend von dem dem freien Ende des Formschlusselements 24a abgewandten Ende des Wischleistenträgers 14a auf die Wischleiste 10a aufgeschoben und dabei mit seinen an die Seitenwände 36a, 38a angeformten Fortsätzen 42a, 44a in Längsnuten der Wischleiste 10a eingeführt. Grundsätzlich könnte die Einführungsschräge 46a auch beidseitig an die Adaptereinheit 18a angeformt bzw. könnte die Adaptereinheit 18a zu einer quer zur Längsrichtung 48a, 50a verlaufenden Mittellinie symmetrisch ausgebildet sein, so dass die Adaptereinheit 18a auch um 180° verdreht montiert werden könnte.

Kommt bei einer fortgeführten Aufschubbewegung der Adaptereinheit 18a dieselbe mit ihrer Einführungsschräge 46a in den Bereich des Formschlusselements 24a, wird das Formschlusselement 24a elastisch in die von der Zwischenwand 40a abgewandte Richtung ausgelenkt und rastet anschließend in der Ausnehmung 26a ein.

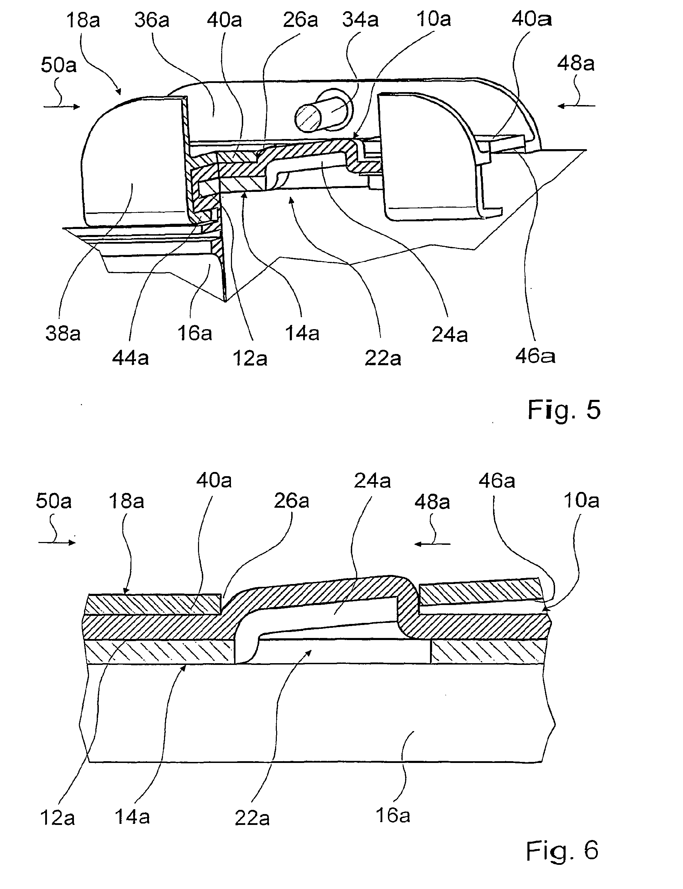

Das in einem Stanz-Biegeprozess an den Wischleistenträger 14a angeformte Formschlusselement 24a ist im Bereich seiner Anlenkstelle an den restlichen Teil des Wischleistenträgers 14a im Wesentlichen im Querschnitt S-förmig ausgebildet (Fig. 4 und 6) und bildet dadurch an seiner Anlenkstelle eine in die Längsrichtung 48a weisende erste Anschlagfläche und durch sein freies Ende eine in Längsrichtung 50a weisende Anschlagfläche. Die Anschlagflächen liegen dabei in zwei unterschiedlichen, im Wesentlichen parallel zu einer zu wischenden Fläche 56a verlaufenden Ebenen. Sich in Längsrichtung 48a, 50a gegenüberliegende Ränder der Ausnehmung 26a der Adaptereinheit 18a liegen ebenfalls in entsprechend versetzt angeordneten Ebenen und bilden zu den vom Formschlusselement 24a gebildeten Anschlagflächen korrespondierende Anschlagflächen. Über die von einer Rastverbindung gebildete Formschlussverbindung 22a ist die Adaptereinheit 18a in beide Längsrichtungen 48a, 50a auf der Wischleiste 10a und auf dem in der Wischleiste 10a angeordneten Wischleistenträger 14a gesichert.

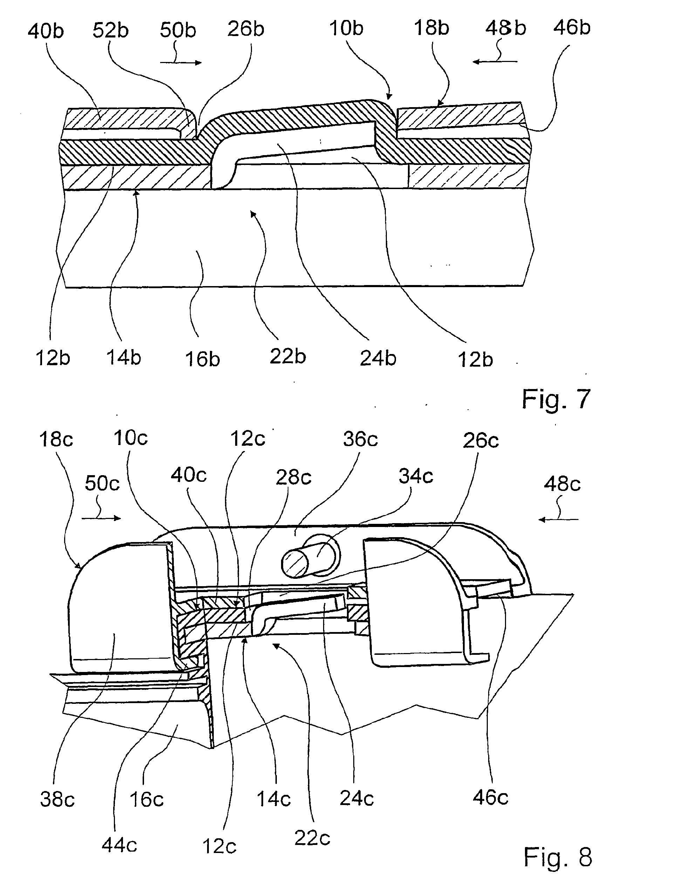

In den Fig. 7 bis 14 sind Ausschnitte alternativer Wischblätter dargestellt. Bei den Ausführungsbeispielen sind in der Beschreibung im Wesentlichen gleiche Bauteile grundsätzlich mit den gleichen Bezugszeichen beziffert, wobei zur Unterscheidung der Ausführungsbeispiele die Buchstaben "a - g" hinzugefügt sind. Ferner kann bezüglich gleichbleibender Merkmale und Funktionen auf die Beschreibung zum Ausführungsbeispiel in den Fig. 1 bis 6 verwiesen werden. Die nachfolgende Beschreibung beschränkt sich im Wesentlichen auf die Unterschiede zum Ausführungsbeispiel in den Fig. 1 bis 6.

Anstatt sich in Längsrichtung 48a, 50a gegenüberliegende Ränder einer Ausnehmung 26a in unterschiedlichen Ebenen angeordnet auszuführen, ist bei einer Adaptereinheit 18b in Fig. 7 an einem einer Einführungsschräge 46b gegenüberliegenden Rand einer Ausnehmung 26b eine zu einer Wischleiste 10b weisende 90°-Umlenkung 52b angeformt, die eine Anschlagfläche für ein Formschlusselement 24b eines Wischleistenträgers 14b bildet. Das Wischblatt in Fig. 8 weist eine Wischleiste 10c auf, die im Bereich einer Formschlussverbindung 22c zwischen einer Adaptereinheit 18c und einem Wischleistenträger 14c eine Aussparung 28c aufweist. Eine Verformung der Wischleiste 10c im Bereich eines Formschlusselements 24c des Wischleistenträgers 14c durch dasselbe kann vermieden und das Formschlusselement 24c kann mit seinen Anschlagflächen vorteilhaft direkt an korrespondierende Anschlagflächen der Adaptereinheit 18c zur Anlage kommen.

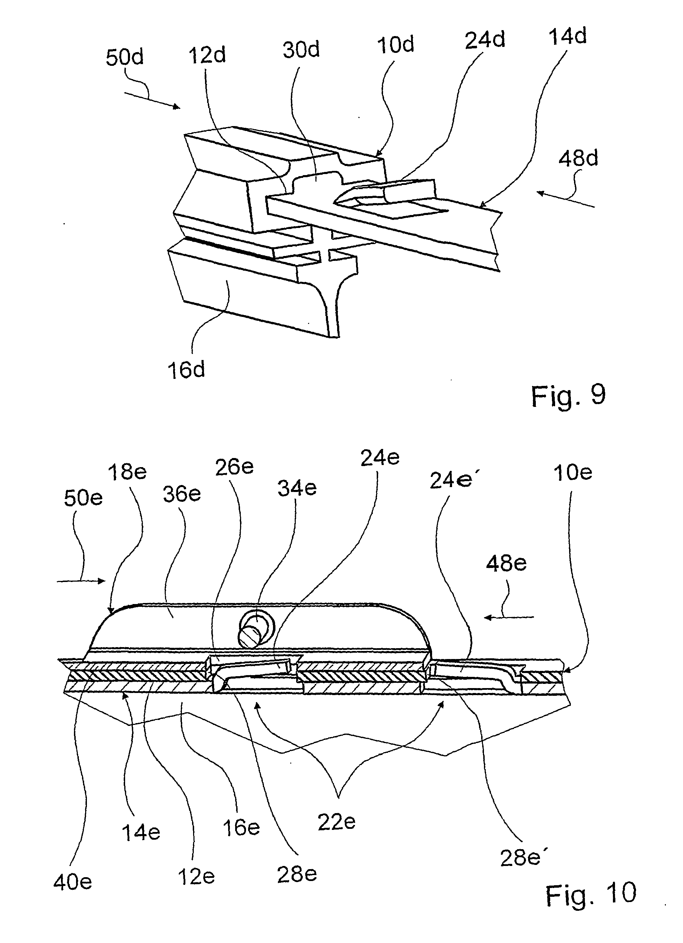

Das Wischblatt in Fig. 9 weist eine Wischleiste 10d auf, die in ihrem Längskanal 12d an einer Deckseite desselben eine von einer Längsnut gebildete Ausnehmung 30d aufweist, durch die ein Formschlusselement 24d eines Wischleistenträgers 14d bei der Montage desselben in die Wischleiste 10d bzw. der Wischleiste 10d auf den Wischleistenträger 14d führbar ist.

Das Wischblatt in Fig. 10 weist eine Formschlussverbindung 22e zwischen einem Wischleistenträger 14e und einer Adaptereinheit 18e auf, die zwei entgegengesetzt wirkende, an den Wischleistenträger 14e angeformte Formschlusselemente 24e, 24e' umfasst. Die Formschlusselemente 24e, 24e' sind zueinander weisend ausgeführt, wobei das Formschlusselement 24e im montierten Zustand in eine Ausnehmung 26e der Adaptereinheit 18e eingerastet ist und mit seinem freien Ende eine in Längsrichtung 50e weisende Anschlagfläche bildet und das Formschlusselement 24e im montierten Zustand in Längsrichtung 48e vor der Adaptereinheit 18e angeordnet ist und mit seinem freien Ende eine in Längsrichtung 48e weisende Anschlagfläche bildet, die mit einer von einer Stirnseite der Adaptereinheit 18e gebildeten Anschlagfläche zusammenwirkt. Eine Wischleiste 10e des Wischblatts weist jeweils im Bereich der Formschlusselemente 24e, 24e' Aussparungen 28e, 28e' auf.

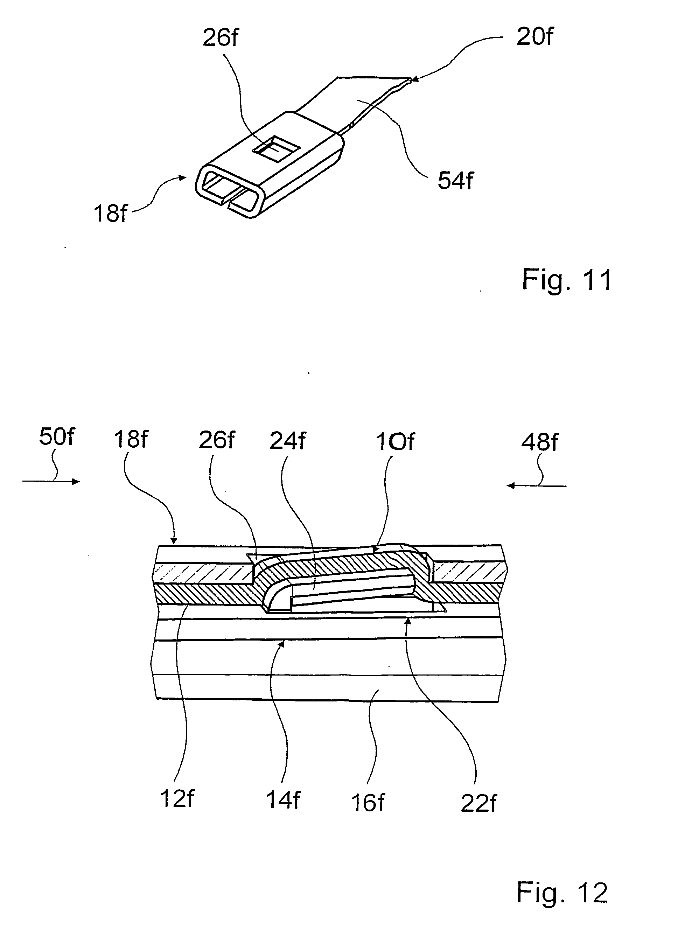

Fig. 11 zeigt einen Ausschnitt eines Wischarms 20f mit einer an eine Wischstange 54f einstückig angeformten Adaptereinheit 18f eines Wischblatts. Die Wischstange 54f und die Adaptereinheit 18f sind aus einem Federstahlblech gebildet, und die Adaptereinheit 18f ist bei einem Herstellprozess der Wischstange 54f, und zwar bei einem Stanz-Biegeprozess, an dieselbe angeformt. Die Adaptereinheit 18f weist im Wesentlichen ein C-Profil auf, in das eine Wischleiste 10f und ein in der Wischleiste 10f angeordneter Wischleistenträger 14f eingeschoben und über eine Formschlussverbindung 22f fixiert werden kann (Fig. 12). Zur Erreichung der Formschlussverbindung ist im Wesentlichen entsprechend dem Ausführungsbeispiel in den Fig. 1 bis 6 an den Wischleistenträger 14f ein Formschlusselement 24f angeformt und in eine Deckseite der Adaptereinheit 18feine Ausnehmung 26f eingebracht. Im montierten Zustand sind die Wischstange 54f und das Wischblatt gelenkfrei miteinander verbunden.

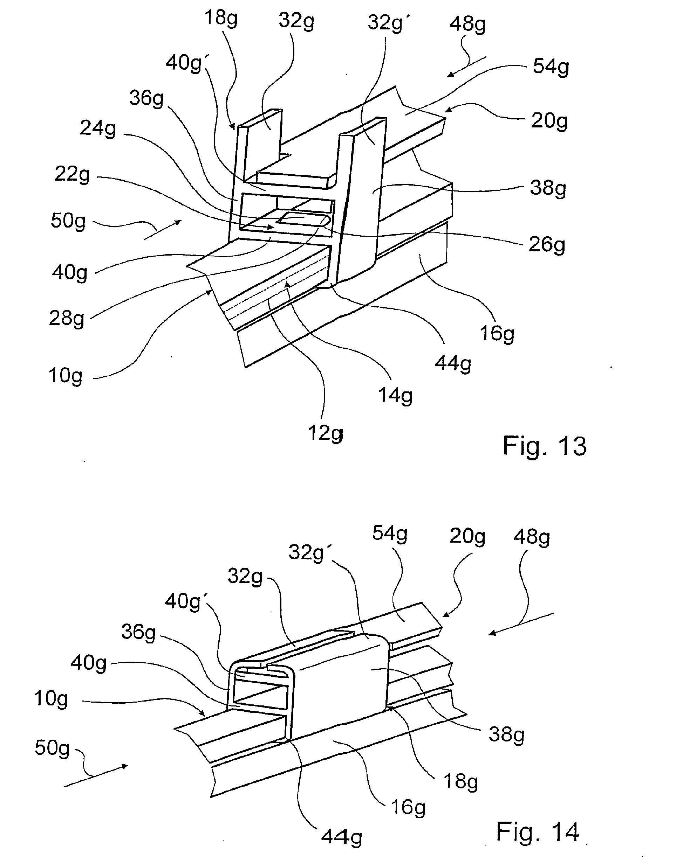

Das Wischblatt in den Fig. 13 und 14 weist eine Adaptereinheit 18g auf, das vor einer Montage des Wischblatts an einer Wischstange 54g eines Wischarms 20g im Wesentlichen ein Doppel-H-Profil mit zwei Zwischenwänden 40g, 40g' aufweist. Während die erste Zwischenwand 40g entsprechend der Zwischenwand 40a im Ausführungsbeispiel in den Fig. 1 bis 6 eine Ausnehmung 26g aufweist und mit dazu dient, eine Formschlussverbindung 22g zwischen der Adaptereinheit 18g und einem Wischleistenträger 14g zu erzielen, dient die zweite Zwischenwand 40g', gemeinsam mit sich in die vom Wischleistenträger 14g abgewandte Richtung erstreckende, Klemmelemente 32, 32g' bildende Seitenwandteilen, zur Befestigung des Wischblatts an der Wischstange 54g.

Bei der Montage wird die Wischstange 54g zwischen die Klemmelemente 32g, 32g' eingeführt und auf die zweite Zwischenwand 40g' gelegt. Anschließend werden die Klemmelemente 32g, 32g' nach innen umgebogen und die Wischstange 54g wird zwischen der zweiten Zwischenwand 40g' und den Klemmelementen 32g, 32g' eingeklemmt (Fig. 14). Nach der Montage sind die Wischstange 54g und das Wischblatt gelenkfrei miteinander verbunden.

Durch die beiden beabstandeten Zwischenwände 40g, 40g' kann ein ungewünschter Kontakt zwischen der Wischstange 54g und einem Formschlusselement 24g des Wischleistenträgers 14g und ein damit verbundenes ungewünschtes Lösen der Formschlussverbindung 22g sicher verhindert werden.

### Bezugszeichen

- 10: Wischleiste
- 12: Längskanal
- 14: Wischleistenträger
- 16: Wischlippe
- 18: Adaptereinheit
- 20: Wischarm
- 22: Formschlussverbindung
- 24: Formschlusselement
- 26: Ausnehmung
- 28: Aussparung
- 30: Ausnehmung
- 32: Klemmelement
- 34: Gelenkbolzen
- 36: Seitenwand
- 38: Seitenwand
- 40: Zwischenwand
- 42: Fortsatz
- 44: Fortsatz
- 46: Einführungsschräge
- 48: Längsrichtung
- 50: Längsrichtung
- 52: 90°-Umlenkung
- 54: Wischstange
- 56: Fläche

## Patentansprüche

1. Wischblatt, insbesondere für ein Kraftfahrzeug, mit einer Wischleiste (10a - 10g), die als Hohlprofil mit einem Längskanal (12a - 12g) ausgebildet ist, in dem ein federelastischer Wischleistenträger (14a - 14g) angeordnet ist, an dessen konkaven Seite sich eine Wischlippe (16a - 16g) der Wischleiste (10a - 10g) entlang erstreckt, sowie mit einer Adaptereinheit (18a 18g) zur Anlenkung an einen Wischarm (20a, 20f, 20g), wobei die Adaptereinheit (18a - 18g) und der Wischleistenträger (14a - 14g) im montierten Zustand über wenigstens eine zumindest in eine erste Längsrichtung (50a - 50g) wirkende Formschlussverbindung (22a - 22g) verbunden sind, **dadurch gekennzeichnet, dass** die Formschlussverbindung (22a - 22g) von einer Rastverbindung gebildet ist.

2. Wischblatt nach Anspruch 1, **dadurch gekennzeichnet, dass** an den Wischleistenträger (14a - 14g) wenigstens ein erstes Formschlusselement (24a - 24g) angeformt ist, das in eine Ausnehmung (26a - 26g) der Adaptereinheit (18a - 18g) eingreift.

3. Wischblatt nach Anspruch 2, **dadurch gekennzeichnet, dass** das Formschlusselement (24a - 24g) von einem freigeschnittenen und aufgebogenen Teilstück des Wischleistenträgers (14a -14g) gebildet ist.

4. Wischblatt nach einem der vorhergehenden Ansprüche, **dadurch gekennzeichnet, dass** die Formschlussverbindung (22a - 22g) neben der ersten Längsrichtung (50a - 50g) in eine zweite Längsrichtung (48a - 48g) wirkt.

5. Wischblatt nach Anspruch 4, **dadurch gekennzeichnet, dass** die Formschlussverbindung (22e) durch zumindest zwei entgegengesetzt wirkende Formschlusselemente (24e, 24e') gebildet ist.

6. Wischblatt nach einem der vorhergehenden Ansprüche, **dadurch gekennzeichnet, dass** die Wischleiste (10c, 10e, 10g) im Bereich der Formschlussverbindung (22c, 22e, 22g) zwischen der Adaptereinheit (18c, 18e, 18g) und dem Wischleistenträger (14c, 14e, 14g) eine Aussparung (28c, 28e, 28g) aufweist.

7. Wischblatt zumindest nach Anspruch 2, **dadurch gekennzeichnet, dass** die Wischleiste (10d) eine Ausnehmung (30d) aufweist, durch die das Formschlusselement (24d) bei der Montage der Wischleiste (10d) auf den Wischleistenträger (14d) führbar ist.

8. Wischblatt zumindest nach Anspruch 2, **dadurch gekennzeichnet, dass** die Adaptereinheit (18a - 18c) eine Einführungsschräge (46a - 46c) zur Auslenkung des Formschlusselements (24a - 24c) bei der Montage aufweist.

9. Wischblatt nach einem der vorhergehenden Ansprüche, **dadurch gekennzeichnet, dass** die Adaptereinheit (18g) wenigstens ein Klemmelement (32g, 32g') zur Befestigung an einem Wischarm (20g) aufweist.

## Claims

1. Wiper blade, in particular for a motor vehicle, with a wiper strip (10a - 10g) which is designed as a hollow profile with a longitudinal channel (12a - 12g) in which is arranged a spring-elastic wiper strip carrier (14a - 14g), along the concave side of which a wiper lip (16a - 16g) of the wiper strip (10a - 10g) extends, and with an adaptor unit (18a - 18g) for coupling to a wiper arm (20a, 20f, 20g), wherein, in the fitted state, the adaptor unit (18a - 18g) and the wiper strip carrier (14a - 14g) are connected via at least one form-fitting connection (22a - 22g) acting at least in a first longitudinal direction (50a - 50g), **characterized in that** the form-fitting connection (22a - 22g) is formed by a latching connection.

2. Wiper blade according to Claim 1, **characterized in that** at least one first form-fitting element (24a - 24g) which engages in a recess (26a - 26g) of the adaptor unit (18a - 18g) is integrally formed on the wiper strip carrier (14a - 14g).

3. Wiper blade according to Claim 2, **characterized in that** the form-fitting element (24a - 24g) is formed by a subsection of the wiper strip carrier (14a - 14g) that is cut free and bent up.

4. Wiper blade according to one of the preceding claims, **characterized in that** the form-fitting connection (22a - 22g) acts in a second longitudinal direction (48a - 48g) in addition to the first longitudinal direction (50a - 50g).

5. Wiper blade according to Claim 4, **characterized in that** the form-fitting connection (22e) is formed by at least two form-fitting elements (24e, 24e') acting in opposite directions.

6. Wiper blade according to one of the preceding claims, **characterized in that** the wiper strip (10c, 10e, 10g) has a cutout (28c, 28e, 28g) in the region of the form-fitting connection (22c, 22e, 22g) between the adaptor unit (18c, 18e, 18g) and the wiper strip carrier (14c, 14e, 14g).

7. Wiper blade at least according to Claim 2, **characterized in that** the wiper strip (10d) has a recess (30d) through which the form-fitting element (24d) can be guided during the fitting of the wiper strip (10d) onto the wiper strip carrier (14d).

8. Wiper blade at least according to Claim 2, **characterized in that** the adaptor unit (18a - 18c) has an introductory slope (46a - 46c) for deflecting the form-fitting element (24a - 24c) during the fitting.

9. Wiper blade according to one of the preceding claims, **characterized in that** the adaptor unit (18g) has at least one clamping element (32g, 32g') for fastening to a wiper arm (20g).

## Revendications

1. Balai d'essuie-glace notamment pour un véhicule automobile comportant une lame d'essuyage (10a - 10g) réalisée sous la forme d'un profil creux avec un canal longitudinal (12a - 12g) recevant un support de lame d'essuie-glace (14a - 14g) ayant l'élasticité d'un ressort et le long de son côté concave s'étend une lèvre d'essuyage (16a - 16g) de la lame d'essuie-glace (10a - 10g), ainsi qu'une unité adaptatrice (18a - 18g) pour être articulée à un bras d'essuie-glace (20a, 20f, 20g),
l'unité adaptatrice (18a - 18g) et le support de lame d'essuie-glace (14a - 14g) étant reliés à l'état monté par au moins une liaison par la forme (22a - 22g) s'étendant dans une première direction longitudinale (50a - 50g),
**caractérisé en ce que**
la liaison par la forme (22a - 22g) est constituée par une liaison enclipsée.

2. Balai d'essuie-glace selon la revendication 1,
**caractérisé en ce qu'**
au moins un premier élément de liaison par la forme (24a - 24g) est réalisé sur le support de lame d'essuie-glace (14a - 14g), cet élément pénétrant dans une cavité (26a - 26g) de l'unité adaptatrice (18a - 18g).

3. Balai d'essuie-glace selon la revendication 2,
**caractérisé en ce que**
l'élément de liaison par la forme (24a - 24g) est constitué par une partie du support de lame d'essuie-glace (14a - 14g) coupée de façon à être dégagée et être recourbée.

4. Balai d'essuie-glace selon l'une quelconque des revendications précédentes,
**caractérisé en ce que**
la liaison par la forme (22a, 22b) agit non seulement dans la première direction longitudinale (50a - 50g) mais également dans une seconde direction longitudinale (48a - 48g).

5. Balai d'essuie-glace selon la revendication 4,
**caractérisé en ce que**
le moyen de liaison par la forme (22e) est constitué au moins par deux éléments de liaison par la forme (24e, 24e') agissant en sens opposé.

6. Balai d'essuie-glace selon l'une quelconque des revendications précédentes,
**caractérisé en ce que**
dans la région de la liaison par la forme (22c, 22e, 22g), entre l'unité adaptatrice (18c, 18e, 18g) et le support de lame d'essuie-glace (14c, 14e, 14g), la lame d'essuie-glace (10c, 10e, 10g) comporte une cavité (28c, 28e, 28g).

7. Balai d'essuie-glace selon la revendication 2,
**caractérisé en ce que**
la lame d'essuie-glace (10d) comporte une cavité (30d) par laquelle, au montage de la lame d'essuie-glace (10d) sur le support de lame d'essuie-glace (14d), on guide l'élément de liaison par la forme (24d).

8. Balai d'essuie-glace selon la revendication 2,
**caractérisé en ce que**
l'unité adaptatrice (18a - 18c) comporte une rampe d'introduction (46a - 46c) pour dévier l'élément de liaison par la forme (24a - 24c) lors du montage.

9. Balai d'essuie-glace selon l'une quelconque des revendications précédentes,
**caractérisé en ce que**
l'unité adaptatrice (18g) comporte au moins un élément de serrage (32g, 32g') pour être fixé à un bras d'essuie-glace (20g).
